# EUROPÄISCHE PATENTANMELDUNG

(11) **EP 2 896 516 A1**
(43) Veröffentlichungstag der Anmeldung: **22.07.2015**
(21) Anmeldenummer: 14199537.3
(22) Anmeldetag: 22.12.2014
(51) Int. Cl.: B60D 1/01, B62B 5/00

(54) **Vorrichtung zum Transportieren von Behälterbehandlungsaggregaten**

(30) Priorität: 20.01.2014 DE 202014100202 U
(71) Anmelder: Krones AG, 93073 Neutraubling (DE)
(72) Erfinder: Hasler, Uwe, 93073 Neutraubling (DE); Wech, Stephan, 93073 Neutraubling (DE); Colceriu, Christian, 93073 Neutraubling (DE)
(74) Vertreter: Grünecker Patent- und Rechtsanwälte PartG mbB

(57) **Zusammenfassung**

Vorrichtung zum Transportieren eines Behälterbehandlungsaggregats, das wenigstens zwei Rollen umfasst, auf denen das Behälterbehandlungsaggregat rollen kann, wobei die Vorrichtung einen Antrieb und wenigstens zwei, durch den Antrieb antreibbare Räder sowie ein Verbindungselement umfasst, wobei das Verbindungselement geeignet ist, eine lösbare Verbindung mit einem zu transportierenden Behälterbehandlungsaggregat einzugehen, wobei der Antrieb ausgebildet ist, um eine Leistung zu erbringen, die wenigstens 400W beträgt, wobei die Vorrichtung eine Anhebvorrichtung umfasst, die geeignet ist, das Behälterbehandlungsaggregat an einer von den zwei Rollen abgewandten Seite des Behälterbehandlungsaggregats anzuheben.

## Beschreibung

Die vorliegende Erfindung betrifft eine Vorrichtung zum Transportieren eines Behälterbehandlungsaggregats, wie beispielsweise eines Etikettieraggregats.

### Stand der Technik

Aus dem Stand der Technik sind Vorrichtungen zum Transportieren schwerer Lasten hinlänglich bekannt. So sind beispielsweise Gabelstapler oder Palettengabeln bekannt, die unter einen zu transportierenden Gegenstand greifen und diesen anheben und somit transportieren können.

So offenbart beispielsweise die EP 2 269 889 A1 einen Adapter in Form einer Gabel oder eines Einschubs, der an einer Antriebseinheit angekoppelt werden kann und so unter eine zu transportierende Ladung gefahren werden kann. Dieser Adapter ist höhenverstellbar, so dass er bis zu einem Berührungspunkt mit dem zu transportierenden Objekt hochgefahren werden kann. Diese Vorrichtungen sind jedoch aufgrund des vollständigen Gewichts des zu transportierenden Objekts, das auf der Gabel lastet, schwer zu lenken, so dass eine passgenaue Positionierung des zu befördernden Objekts, insbesondere mit Hinblick auf Behälterbehandlungsaggregate, schwierig ist.

### Aufgabe

Ausgehend vom Stand der Technik ist es daher Aufgabe der vorliegenden Erfindung, eine Vorrichtung zum Transportieren von Behälterbehandlungsaggregaten bereitzustellen, die eine genaue Steuerung und Positionierung des beförderten Behälterbehandlungsaggregats ermöglicht.

### Lösung

Diese Aufgabe wird erfindungsgemäß durch die Vorrichtung zum Transportieren eines Behälterbehandlungsaggregats gemäß Anspruch 1 gelöst. Weiterhin wird ein System aus einer Vorrichtung zum Transportieren von Behälterbehandlungsaggregaten und wenigstens zwei Behälterbehandlungsaggregaten bereitgestellt. Vorteilhafte Weiterbildungen der Erfindung sind in den Unteransprüchen erfasst.

Die erfindungsgemäße Vorrichtung zum Transportieren eines Behälterbehandlungsaggregats, das wenigstens zwei Rollen umfasst, auf denen das Behälterbehandlungsaggregat rollen kann, umfasst einen Antrieb und wenigstens zwei, durch den Antrieb antreibbare Räder sowie ein Verbindungselement, wobei das Verbindungselement geeignet ist, eine lösbare Verbindung mit einem zu transportierenden Behälterbehandlungsaggregat einzugehen, wobei der Antrieb ausgebildet ist, um eine Leistung zu erbringen, die wenigstens 400W beträgt, wobei die Vorrichtung eine Anhebvorrichtung umfasst, die geeignet ist, das Behälterbehandlungsaggregat an einer von den zwei Rollen abgewandten Seite des Behälterbehandlungsaggregats anzuheben. Durch diese Vorrichtung wird ein leichteres Transportieren der Behälterbehandlungsaggregate ermöglicht, insbesondere mit Hinblick auf die Lenkbarkeit und dementsprechend eine genaue Ausrichtung des Behälterbehandlungsaggregats.

Das Verbindungselement kann zum Ausbilden einer formschlüssigen Kupplung mit dem Behälterbehandlungsaggregat ausgebildet sein. Die Kupplung erlaubt vorzugsweise Bewegungen zwischen den zusammengekoppelten Teilen.

Gemäß einer Ausführungsform ist die Vorrichtung als Wagen ausgebildet. Die Ausbildung als Wagen ist für das Bedienpersonal besonders handlich, weshalb der Umgang mit der Vorrichtung zum Transportieren des Behälterbehandlungsaggregats deutlich vereinfacht wird.

In einer weiteren Ausführungsform ist der Antrieb als Elektromotor ausgebildet. Da Elektromotoren auf vielfältige Weise angewendet werden können und gleichzeitig diverse Möglichkeiten zur Energieversorgung eines Elektromotors bestehen, bietet diese Ausgestaltung erhebliche Vorteile mit Hinblick auf die flexible Einsetzbarkeit der Vorrichtung.

Gemäß einer Weiterbildung der Erfindung ist der Antrieb austauschbar ausgebildet. So kann ein Austausch eines eventuell fehlerhaften Motors auf relativ einfache Weise erreicht werden und es muss nicht die gesamte Vorrichtung für eine Reparatur außer Dienst gestellt werden.

Es kann vorgesehen sein, dass die Vorrichtung eine manuelle Lenkung umfasst. Eine manuelle Lenkung erlaubt eine intuitive Beförderung der Behälterbehandlungsaggregate mit Hilfe dieser Vorrichtung.

Weiterhin kann die Vorrichtung dadurch gekennzeichnet sein, dass die Lenkung als elektrisch unterstütze Servolenkung ausgebildet ist. Auf diese Weise wird die vorgesehene Lenkung noch vereinfacht, wodurch die Positionierung von relativ schweren Behälterbehandlungsaggregaten (bis zu 1200 kg) erleichtert wird.

In einer Ausführungsform ist die Vorrichtung dadurch gekennzeichnet, dass der Vorrichtung eine Steuereinheit und eine automatische Lenkung zugeordnet sind, wobei die Steuereinheit geeignet ist, die Bewegung der Vorrichtung in Abhängigkeit von Steuerbefehlen zu steuern. Auf diese Weise kann ein vollständig autonomes Transportsystem für Behälterbehandlungsaggregate realisiert werden.

Es kann auch vorgesehen sein, dass das Verbindungselement austauschbar ausgebildet ist. Ein austauschbares Verbindungselement ermöglicht es, die Vorrichtung für den Transport nur bestimmter Behälterbehandlungsaggregate mit bestimmten Verbindungselementen auszustatten, so dass eine unabsichtliche Verwechslung des zu befördernden Behälterbehandlungsaggregats durch beispielsweise einen Bediener ausgeschlossen wird.

In einer Weiterbildung dieser Ausführungsform ist das Verbindungselement einzigartig für jeden Behälterbehälterbehandlungsaggregattyp. So wird die vorhergehende Ausführungsform weiter verbessert, da so eine eindeutige Identifikation eines Behälterbehandlungsaggregattyps möglich ist.

Die Vorrichtung kann gemäß einer Ausführungsform eine Batterie, einen Akku oder eine andere Spannungsquelle umfassen, die geeignet sind, den Antrieb mit Strom zu versorgen. Diese Spannungsquellen liefern beispielsweise hinsichtlich ihrer Laufzeit und Wiederaufladbarkeit entsprechende Vorteile.

Weiterhin kann die Vorrichtung eine elektronische Schnittstelle umfassen, die geeignet ist, Daten, insbesondere Identifikationsdaten von einem zu transportierenden Behälterbehandlungsaggregat zu empfangen und zu überprüfen. So können auch logistische Problemstellungen, wie beispielsweise das Einpflegen einer veränderten Position eines bestimmten Behälterbehandlungselements in eine entsprechende Datenbank automatisiert werden.

In einer Ausführungsform ist vorgesehen, dass die Anhebvorrichtung das Verbindungselement umfasst. So kann die Vorrichtung zum Transportieren eines Behälterbehandlungsaggregats kompakter ausgebildet werden.

Weiterhin kann die Anhebvorrichtung eine um eine (im Betrieb weitgehend vertikale) Achse rotationssymmetrische Auflagefläche oder Zentrierungsmittel für das Behälterbehandlungsaggregat umfassen. Eine solche Auflagefläche bietet den Vorteil, dass hier eine flexible Verbindung zwischen der Vorrichtung zum Transportieren und dem eigentlichen Behälterbehandlungsaggregat hergestellt wird, wodurch das Behälterbehandlungsaggregat leicht gelenkt werden kann. Die Auflagefläche kann z.B. Teil einer Kugeloberfläche oder Teil eines Kegels (Kegel mit kreisförmiger oder eckiger Grundfläche) oder Teil einer Pyramide (mit eckiger Grundfläche) sein.

Umfasst die Auflagefläche auch schräge, gegenüber der horizontalen und vertikalen Richtung geneigte Flächenteile, so kann dies eine Zentrierung des Behälterbehandlungsaggregat auf der Anhebvorrichtung bewirken. Durch eine solche Zentrierung bzw. Zentrierungsmittel lässt sich ein Verrutschen des Behälterbehandlungsaggregats beim Transport verhindern.

Vorteilhaft sind auch solche Verbindungselemente, die in dem mit dem Behälterbehandlungsaggregats zusammengekoppelten Zustand eine (Gelenk)-Bewegung zwischen Behälterbehandlungsaggregat und der Vorrichtung zum Transportieren ermöglichen. Dadurch kann ein Lenken erleichtert werden und/oder eine Anpassung an Bodenunebenheiten ermöglicht werden. Dazu kann z.B. ein Verbindungselement mit einer Auflagefläche für das Behälterbehandlungsaggregat vorgesehen sein, die rotationssymmetrisch um eine vertikalen Achse ist, und durch Formschluss seitliche Kräfte übertragen kann.

Ferner ist die Vorrichtung gemäß einer Ausführungsform dadurch gekennzeichnet, dass die Anhebvorrichtung als durch den Motor antreibbar ausgebildet ist oder ein die Anhebvorrichtung antreibender Motor vorgesehen ist; und wobei die Anhebvorrichtung wenigstens einen Elektrozylinder umfasst. Die Ausbildung der Anhebvorrichtung als einen Elektrozylinder umfassend erlaubt das Ausnutzen der durch den Antrieb bereitgestellten Energie oder des separaten Antriebs für die Anhebvorrichtung. Weiterhin sind Elektrozylinder dadurch ausgezeichnet, dass sie besonders gut einstellbar sind, was das Anheben des Behälterbehandlungsaggregats mit höherer Präzision ermöglicht.

Es kann ferner ein System aus einer Vorrichtung zum Transportieren von Behälterbehandlungsaggregaten und wenigstens zwei Behälterbehandlungsaggregaten unterschiedlicher Art verwirklicht werden, wobei jedes Behälterbehandlungsaggregat wenigstens zwei Rollen umfasst, auf denen es rollen kann, wobei die Vorrichtung einen Antrieb und wenigstens zwei, durch den Antrieb antreibbare Räder sowie ein erstes, austauschbares Verbindungselement umfasst, wobei das Verbindungselement geeignet ist, eine lösbare Verbindung mit einem zu transportierenden Behälterbehandlungsaggregat einzugehen, wobei der Antrieb ausgebildet ist, um eine Leistung zu erbringen, die wenigstens 400W beträgt, wobei die Vorrichtung eine Anhebvorrichtung umfasst, die geeignet ist, das Behälterbehandlungsaggregat an einer von den zwei Rollen abgewandten Seite des Behälterbehandlungsaggregats anzuheben; wobei jedes Behälterbehandlungsaggregat ein zweites, von jedem anderen Behälterbehandlungsaggregat verschiedenes Verbindungselement umfasst und das erste Verbindungselement und das zweite Verbindungselement in eineindeutiger Weise einander zugeordnet sind. So kann ein sicherer Transport von den jeweils richtigen Behälterbehandlungsaggregaten aufgrund der eindeutigen Zuordnung von dem ersten Verbindungselement an der Vorrichtung zum Transportieren und dem zweiten Verbindungselement am Behälterbehandlungsaggregat gewährleistet werden.

### Kurze Beschreibung der Figuren

- Fig. 1a bis 1c: zeigt eine Ausführungsform der erfindungsgemäßen Vorrichtung.
- Fig. 2a: Schematische Darstellung unterschiedlicher Ausführungsformen des Verbindungselements.
- Fig. 2b: Schematische Darstellung einer weiteren Ausführungsform der Erfindung.

### Ausführliche Beschreibung

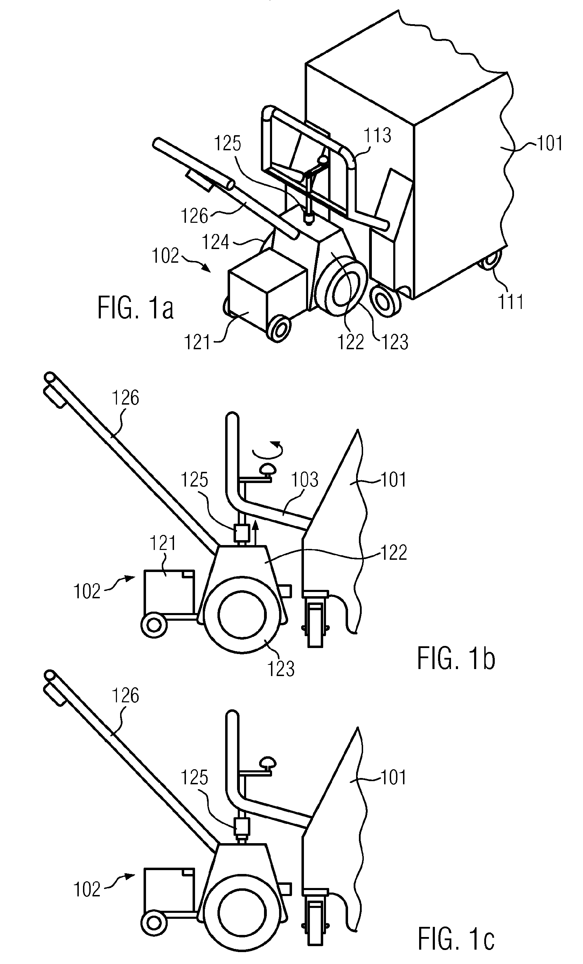

Fig. 1a zeigt eine Anordnung 100, bei der eine erfindungsgemäße Vorrichtung zum Transportieren von Behälterbehandlungsaggregaten, wie dem Behälterbehandlungsaggregat 101, gezeigt wird. Die Vorrichtung 102 ist in dieser Ausführungsform als Wagen ausgebildet. Das Behälterbehandlungsaggregat kann jedes Aggregat sein, so beispielsweise ein Etikettieraggregat. Obwohl das Behälterbehandlungsaggregat im Prinzip beliebig ausgeführt sein kann, ist vorgesehen, dass es wenigstens zwei Rollen umfasst, auf denen es rollen kann. Weiterhin kann es gegebenenfalls eine von der Seite, an der die Rollen 111 angebracht sind, wegweisende Befestigung 113 aufweisen.

Die erfindungsgemäße Vorrichtung 102 zum Transportieren des Behälterbehandlungsaggregats 101 umfasst neben wenigstens zwei Rädern 123 und 124 auch ein Verbindungselement 125, das beispielsweise mit der Befestigung 113 des Behälterbehandlungsaggregats eine Verbindung eingehen kann. Selbst wenn das Behälterbehandlungsaggregat 101 nicht über eine entsprechende Befestigung 113 verfügt, ist vorgesehen, dass das Verbindungselement 125 an irgendeiner geeigneten Stelle des Behälterbehandlungsaggregats befestigt werden kann, so dass eine Verbindung zwischen dem zu transportierenden Behälterbehandlungsaggregat 101 und der Vorrichtung zum Transportieren desselben 102 hergestellt werden kann. Diese Verbindung ist vorzugsweise lösbar, so dass sie nach Beendigung des Transports des Behälterbehandlungsaggregats wieder gelöst werden kann und die Vorrichtung zum Transport von Behälterbehandlungsaggregaten weiter verwendet werden kann.

In der hier dargestellten Ausführungsform ist die Vorrichtung zum Transportieren 102 als Wagen dargestellt. Diese Ausführungsform ist nicht zwingend. Es können auch andere Formen für die Vorrichtung 102 gewählt werden. Die Ausführungsform als Wagen, der gegebenenfalls eine vorzugsweise ergonomisch geformte Lenkung 126 umfassen kann, ist jedoch bevorzugt. Es wird daher im Folgenden gleichbedeutend von dem Wagen als auch von der Vorrichtung zum Transportieren von Behälterbehandlungsaggregaten gesprochen.

Fig. 1b zeigt dieselbe Vorrichtung in einer Seitenansicht. In dieser Ansicht ist zu erkennen, dass der Wagen 102 in dieser Ausführungsform aus einem Rumpfteil 122, an dem die Räder 123 (und 124 wie in Fig. 1a, hier nur nicht dargestellt) befestigt sind. An diesem Rumpfteil kann weiterhin das Verbindungselement 125 vorgesehen sein, das in irgendeiner Weise mit dem Behälterbehandlungsaggregat verbunden wird. Vorteilhaft ist, wenn der Wagen 102 über einen Motor, insbesondere einen Elektromotor, verfügt. Dieser kann abnehmbar konstruiert sein und beispielsweise als zusätzliches Bauteil 121 mit Rollen am Wagen befestigt werden. Der Motor kann mittels eines Akkus oder Batterien angetrieben werden, wodurch Kabel, die beispielsweise durch eine Werkshalle gelegt werden müssten, um den Wagen 102 anzutreiben, überflüssig werden.

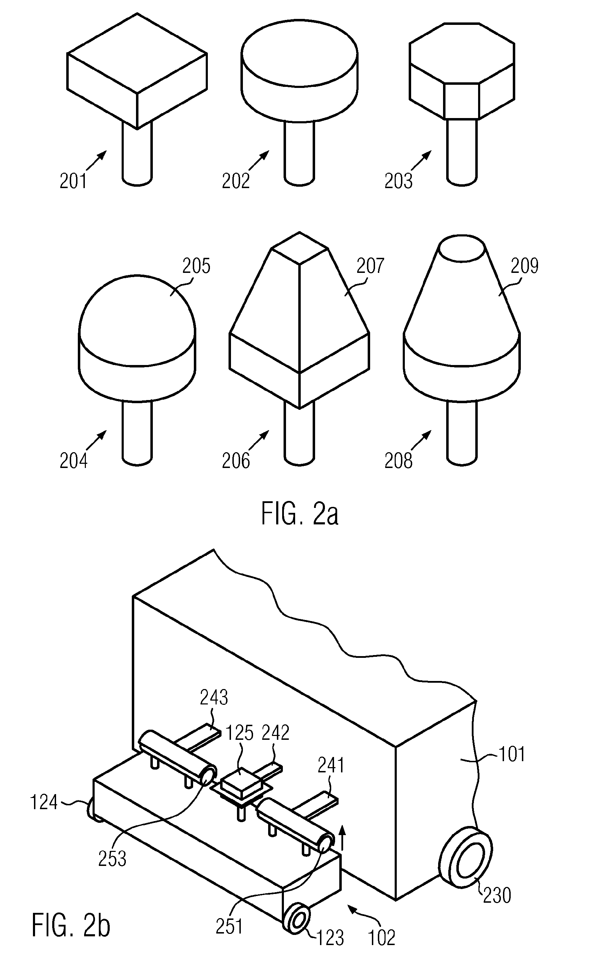

Es kann vorgesehen sein, dass der Wagen 102 eine Anhebvorrichtung, die hier nicht dargestellt ist, umfasst. Diese kann beispielsweise mit Hilfe von Elektrozylindern, wie in Fig. 2b beschrieben werden wird, ein Anheben des Etikettieraggregats auf einer Seite bewirken. Alternativ kann auch vorgesehen sein, dass beispielsweise mit Hilfe einer Kurbel eine Höhenverstellung des Verbindungselements 125 möglich ist, wie sie von Fig. 1b zu Fig. 1c erfolgt. Diese Höhenverstellung kann entweder über eine entsprechende Kurbel oder allgemein ein manuelles Hilfsmittel, das am Verbindungselement angebracht ist, erfolgen oder beispielsweise über ein an der Lenkung 126 angebrachtes Bedienelement. Bevorzugt ist, wenn von einem Bediener so wenig mechanische Arbeit wie möglich verrichtet werden muss, um einen Transport eines Behälterbehandlungsaggregats mit Hilfe des Wagens 102 zu gewährleisten.

So kann in einer Ausführungsform auch vorgesehen sein, dass die Steuereinheit den Wagen 102 steuert. In diesem Fall kann beispielsweise mit Hilfe von GPS-Sensoren oder ähnlichen Vorrichtungen zur Positionsbestimmung des Wagens innerhalb einer Werkshalle eine Steuerung des Wagens realisiert werden.

Grundsätzlich ist der beschriebene Elektromotor so ausgebildet, dass er ein Behälterbehandlungsaggregat transportieren kann. Dazu ist vorgesehen, dass die Leistung des Motors wenigstens 400W beträgt. So kann gewährleistet werden, dass Behälterbehandlungsaggregate von einem Gewicht zwischen 800 und 1500 kg selbst durch Werkhallen mit leichtem Anstieg sicher befördert werden können. Der Motor treibt oder bremst dazu die Räder 123 und 124 je nach Gefälle und nach Eingabe eines Nutzers. Es kann auch vorgesehen sein, dass die vom Motor erbrachte Leistung variabel ist, falls es notwendig wird also mehr Leistung abgerufen werden kann. So kann im Normalbetrieb bei nur geringer Belastung dauerhaft eine Leistung von 400-500W erbracht werden, bei 12V Betriebsspannung und 20A Betriebsstromstärke. Ist beispielsweise eine Steigung zu überwinden, so kann entweder manuell oder automatisch die Leistung auf ca. 1kW, beispielsweise 1080W, erhöht werden, wobei dies bei 12V und 90A Betriebsstromstärke erreicht wird. Um kurzzeitig noch höhere Leistungen abzurufen, um beispielsweise extreme Steigungen zu überwinden oder eine Notbremsung durchzuführen, kann der Motor mit 12V und 120A Betriebsstromstärke betrieben werden, womit dann kurzzeitig eine Leistung von 1440W erreicht wird. Die hier angegebenen Betriebsspannungen und Betriebsstromstärken sind hier nur als Beispiele zu verstehen. Auch andere Ausführungen kommen in Frage.

Grundsätzlich ist bevorzugt, wenn wenigstens 3 Leistungsstufen zur Verfügung stehen, eine für geringe Belastung (keine Steigung beispielsweise) mit einer Leistung von etwa 400W, eine zweite Leistungsstufe, die eine Leistung von bis zu 1kW liefern kann, wobei diese Leistung auch über längere Zeit, beispielsweise zum Überwinden von leichten Steigungen, aufrechterhalten werden kann und eine dritte Leistungsstufe, die im Bedarfsfall kurzzeitig eine Leistung von 2kW abrufen kann. Es können hier natürlich auch andere Werte für die einzelnen Leistungsstufen vorgesehen sein und/oder auch mehr Leistungsstufen, beispielsweise 5, bereitgestellt werden. Auch eine stufenlose Einstellbarkeit der Leistung ist denkbar. So können beispielsweise für bestimmte Klassen von Behälterbehandlungsaggregaten jeweils 3 Leistungsstufen bereitgestellt werden, die automatisch angewählt werden, wenn die entsprechende lösbare Verbindung und damit ggf. eine eindeutige Identifikation des Behälterbehandlungsaggregats erfolgt ist. Die jeweiligen Leistungsstufen können dann abhängig von der Masse des zu befördernden Behälterbehandlungsaggregats gewählt werden. So kann bei Aggregaten mit einer Masse von bis zu 800kg beispielsweise auf die oben beschriebenen Leistungsstufen zugegriffen werden, während bei deutlich schwereren Aggregaten, mit Massen im Bereich von 1500kg, 3 Leistungsstufen mit Leistungen von 1kW, 2kW, 5kW zur Verfügung gestellt werden können. Wenn der Motor austauschbar ausgebildet ist, ergibt sich hier auch der Vorteil, dass, je nach zu beförderndem Aggregat, ein anderer Motor verwendet werden kann, der sich hinsichtlich der Leistungsstufen von den übrigen Motoren unterscheiden kann.

Fig. 2a zeigt mögliche Ausführungsformen des Verbindungselements. Da das Verbindungselement nicht nur zum Herstellen einer Verbindung mit dem Behälterbehandlungsaggregat sondern auch zum Zweck der Identifikation des Behälterbehandlungsaggregats verwendet werden kann, ist vorgesehen, dass das Verbindungselement austauschbar ist und wohldefinierte Form aufweist. Besonders bevorzugt ist es, wenn ein Befördern eines Behälterbehandlungsaggregats nur dann möglich ist, wenn das Verbindungselement eine korrekte Verbindung mit dem Behälterbehandlungsaggregat hergestellt hat. Wird das Verbindungselement als Identifikationselement verwendet, so ist bevorzugt, dass das Behälterbehandlungsaggregat über ein komplementäres zweites Verbindungselement verfügt, in das das erste, welches am Wagen vorgesehen ist, eingepasst werden kann. Hier kann mittels eines Einrasters oder beispielsweise eines piezoelektrischen Sensors, erreicht werden, dass der Wagen so lange blockiert, wie nicht sichergestellt ist, dass der Wagen mit dem richtigen Behälterbehandlungsaggregat verbunden ist. So können beispielsweise für unterschiedliche Behälterbehandlungsaggregattypen unterschiedliche Verbindungselemente bzw. Identifikationselemente 201-203 vorgesehen sein. Diese können eine grundsätzlich rechteckige Form, zylindrische Form oder hexagonale Form aufweisen oder jede beliebige andere Form. Besonders bevorzugt ist es, wenn jedem Behälterbehandlungsaggregattyp oder sogar jedem Behälterbehandlungsaggregat eindeutig ein Verbindungselement am Wagen zugeordnet ist. So kann beispielsweise das Verbindungselement 201, wie in Fig. 2a dargestellt, für einen ersten Behälterbehandlungsaggregattyp verwendet werden und auch nur für diesen und das Verbindungselement 202 oder 203 für einen weiteren Typ von Behälterbehandlungsaggregaten und auch nur für diesen Behälterbehandlungsaggregattyp verwendet werden. So entsteht eine eineindeutige Zuordnung von Behälterbehandlungsaggregattypen und Verbindungselementen am Wagen, wodurch ein unbeabsichtigtes Verlegen eines Behälterbehandlungsaggregats vermieden wird und so unbeabsichtigte Stillstandszeiten vermieden werden können. Dies ist besonders vorteilhaft, wenn ein und derselbe Wagen für eine Vielzahl von Behälterbehandlungsaggregaten unterschiedlicher Behälterbehandlungsaggregattypen verwendet werden soll.

Das Verbindungselement 204 hat eine Fläche 205 die Teil einer Kugeloberfläche ist. Dadurch hat sie Flächenteile, die schräge gegenüber der Vertikalen und der Horizontalen sind. Die Variante 206 des Verbindungselements zeigt einen Pyramidenstumpf als Auflagefläche. Auch diese weist schräge (gegenüber der Vertikalen und der Horizontalen) Flächenteile 207 auf. Durch die schrägen Flächenteile ergibt sich eine Zentrierung des Behälterbehandlungsaggregats. Bei der Variante 208 des Verbindungselements gibt eine Auflagefläche in Form eines Kegelstumpfes mit schrägen Flächenteilen 209.

Die Varianten 204 und 208 haben zusätzlich den Vorteil, dass eine Gelenkbewegung zwischen Behälterbehandlungsaggregat und der Anhebvorrichtung möglich ist, wodurch sich eine gute Lenkbarkeit (Variante 204 und 208 wg. Rotationssymmetrie um Vertikale) und/oder eine Anpassungsfähigkeit an Bodenunebenheiten (Variante 204) ergibt.

In Fig. 2b ist erneut schematisch ein Wagen bzw. eine Vorrichtung zum Transportieren eines Behälterbehandlungsaggregats dargestellt. Obschon dieser in seiner Form hier anders dargestellt ist als in den übrigen Ausführungsformen, kann hier auch der Wagen aus Fig. 1a-1c Verwendung finden. In Fig. 2b wird die Anhebvorrichtung näher beschrieben. Gemäß dieser Ausführungsform umfasst die Anhebvorrichtung zwei horizontal verlaufende Zylinder 251 und 253. Diese sind jeweils links und rechts von dem Verbindungselement 125 angeordnet. Das Behälterbehandlungsaggregat 101 umfasst Befestigungen 241 und 243, die aus Zylindermantelhälften bestehen, in die die Zylinder 251 und 253 der Anhebvorrichtung eingreifen können. Die Befestigungen müssen nicht überhängen, wie hier dargestellt, sie können auch direkt als Aussparungen in einer Seitenfläche des Behälterbehandlungsaggregats integriert sein. Das Verbindungselement 125 kann in ein behälterbehandlungsaggregatseitiges Verbindungselement 242 eingreifen. Wie in Fig. 2a beschrieben, kann vorgesehen sein, dass der Transport des Behälterbehandlungsaggregats 101 mit dem Wagen 102 nur dann möglich ist, wenn das Verbindungselement 125 des Wagens in das Verbindungselement 242 des Behälterbehandlungsaggregats korrekt einfasst. Wenn dies gewährleistet ist, kann die Anhebvorrichtung beispielsweise die Zylinder 251 und 243 anheben, so dass sie zunächst in die Zylindermäntel der Befestigungen 241 und 243 eingreifen und das Behälterbehandlungsaggregat im weiteren Verlauf auf dieser Seite anheben. Es ist vorgesehen, dass das entsprechende Anheben an einer von den Rollen 230 des Behälterbehandlungsaggregats 101 weg weisenden Seite des Behälterbehandlungsaggregats stattfindet, so dass die Rollen 230 auch für den Transport des Behälterbehandlungsaggregats genutzt werden können. Insbesondere ist vorgesehen, dass die Anhebvorrichtung an einer seitlichen Begrenzungsfläche des Behälterbehandlungsaggregats angreifen kann und nicht unterhalb des Behälterbehandlungsaggregats, wodurch das gesamte Behälterbehandlungsaggregat 101 angehoben werden müsste und sein gesamtes Gewicht auf dem Wagen läge. Auch wenn die Anhebvorrichtung hier als getrennt von dem Verbindungselement dargestellt ist, kann vorgesehen sein, dass die Anhebvorrichtung auch das Verbindungselement 125 umfasst und zusammen mit beispielsweise den horizontal verlaufenden Zylindern 251 und 253 anhebt. Ebenso kann auf die Zylinder 251 und 253 verzichtet werden und ein Anheben des Behälterbehandlungsaggregats allein durch ein Anheben des Verbindungselements 125 gewährleistet wird. In diesem Fall wäre dieses Verbindungselement 125 verstärkt ausgebildet, um das Gewicht des Behälterbehandlungsaggregats 101 zumindest teilweise tragen zu können. Eine Ausbildung der Anhebvorrichtung in dieser Form bietet den Vorteil, dass das Behälterbehandlungsaggregat zwar angehoben wird aber gleichzeitig permanent überprüft werden kann, ob es sich um das richtige Behälterbehandlungsaggregat handelt.

Es sei erwähnt, dass die beschriebenen Zylinder 251 und 253 vorzugsweise über einen Elektrozylinder oder einen Pneumatikzylinder oder einen Hydraulikzylinder angetrieben werden können. Um die Abmessungen des Wagens jedoch möglichst klein zu halten, ist vorgesehen, dass ein Elektrozylinder verwendet wird, da Hydraulik- oder Pneumatikzylinder weitere Pumpen benötigen, um zu funktionieren. Ebenso ist es keinesfalls zwingend, dass die Anhebvorrichtung Zylinder 251 und 253 umfasst. Die entsprechenden anhebbaren Bestandteile der Anhebvorrichtung könne auch als Quader oder jede beliebige andere geometrische Form ausgebildet sein. Ebenso ist es nicht notwendig, dass sie parallel zur Achse des hier dargestellten Wagens 102 verlaufen. Sie können auch nur auf einer Seite des Wagens oder horizontal, aber senkrecht zur Radachse des Wagens angeordnet sein. Die Form ist grundsätzlich beliebig. Es sind jedoch Formen bevorzugt, die ein problemloses Eingreifen bei gleichzeitig stabilem Sitz der Anhebelemente ermöglichen. Umfasst die Anhebvorrichtung nur das Verbindungselement 125, kann vorgesehen sein, dass dieses drehbar gelagert ist, so dass aufgrund der punktuellen Auflagefläche eine Drehung des Behälterbehandlungsaggregats um eine vertikal durch das Verbindungselement verlaufende Achse möglich ist, ähnlich einer Anhängerkupplung. Die in Fig. 2b dargestellte Ausführungsform repräsentiert eine eindimensionale Auflagefläche für die Befestigung des Behälterbehandlungsaggregats 101, was eine drehbare Ausführung erschwert. Da jedoch vorzugsweise der Wagen selbst über eine entsprechende Lenkung verfügt und die Räder 123 und 124 schwenkbar ausgebildet sein können, kann so eine ausreichende Lenkbarkeit von Wagen mit Behälterbehandlungsaggregat gewährleistet werden.

## Patentansprüche

1. Vorrichtung zum Transportieren eines Behälterbehandlungsaggregats, das wenigstens zwei Rollen umfasst, auf denen das Behälterbehandlungsaggregat rollen kann, wobei die Vorrichtung einen Antrieb und wenigstens zwei, durch den Antrieb antreibbare Räder sowie ein Verbindungselement umfasst, wobei das Verbindungselement geeignet ist, eine lösbare Verbindung mit einem zu transportierenden Behälterbehandlungsaggregat einzugehen, wobei der Antrieb ausgebildet ist, um eine Leistung zu erbringen, die wenigstens 400W beträgt, wobei die Vorrichtung eine Anhebvorrichtung umfasst, die geeignet ist, das Behälterbehandlungsaggregat an einer von den zwei Rollen abgewandten Seite des Behälterbehandlungsaggregats anzuheben.

2. Vorrichtung nach Anspruch 1, **dadurch gekennzeichnet, dass** die Vorrichtung als Wagen ausgebildet ist.

3. Vorrichtung nach Anspruch 1 oder 2, **dadurch gekennzeichnet, dass** der Antrieb als Elektromotor ausgebildet ist.

4. Vorrichtung nach einem der Ansprüche 1 bis 3, **dadurch gekennzeichnet, dass** der Antrieb austauschbar ausgebildet ist.

5. Vorrichtung nach einem der Ansprüche 1 bis 4, **dadurch gekennzeichnet, dass** die Vorrichtung eine manuelle Lenkung umfasst.

6. Vorrichtung nach Anspruch 5, **dadurch gekennzeichnet, dass** die Lenkung als elektrisch unterstütze Servolenkung ausgebildet ist.

7. Vorrichtung nach einem der Ansprüche 1 bis 4, **dadurch gekennzeichnet, dass** der Vorrichtung eine Steuereinheit und eine automatische Lenkung zugeordnet sind, wobei die Steuereinheit geeignet ist, die Bewegung der Vorrichtung in Abhängigkeit von Steuerbefehlen zu steuern.

8. Vorrichtung nach einem der Ansprüche 1 bis 7, **dadurch gekennzeichnet, dass** das Verbindungselement austauschbar ausgebildet ist.

9. Vorrichtung nach Anspruch 8, **dadurch gekennzeichnet, dass** das Verbindungselement einzigartig für jeden Behälterbehälterbehandlungsaggregattyp ist.

10. Vorrichtung nach einem der Ansprüche 1 bis 9, **dadurch gekennzeichnet, dass** die Vorrichtung eine Batterie, einen Akku oder eine andere Spannungsquelle umfasst, die geeignet sind, den Antrieb mit Strom zu versorgen.

11. Vorrichtung nach einem der Ansprüche 1 bis 10, **dadurch gekennzeichnet, dass** die Vorrichtung eine elektronische Schnittstelle umfasst, die geeignet ist, Daten, insbesondere Identifikationsdaten von einem zu transportierenden Behälterbehandlungsaggregat zu empfangen und zu überprüfen.

12. Vorrichtung nach einem der Ansprüche 1 bis 11, **dadurch gekennzeichnet, dass** die Anhebvorrichtung das Verbindungselement umfasst.

13. Vorrichtung nach einem der Ansprüche 1 bis 12, **dadurch gekennzeichnet, dass** die Anhebvorrichtung eine rotationssymmetrische Auflagefläche oder Zentrierungsmittel für das Behälterbehandlungsaggregat umfasst.

14. Vorrichtung nach einem der Ansprüche 1 bis 13, **dadurch gekennzeichnet, dass** die Anhebvorrichtung als durch den Motor antreibbar ausgebildet ist oder ein die Anhebvorrichtung antreibender Motor vorgesehen ist und wobei die Anhebvorrichtung wenigstens einen Elektrozylinder umfasst.

15. System aus einer Vorrichtung zum Transportieren von Behälterbehandlungsaggregaten und wenigstens zwei Behälterbehandlungsaggregaten unterschiedlicher Art, wobei jedes Behälterbehandlungsaggregat wenigstens zwei Rollen umfasst, auf denen es rollen kann, wobei die Vorrichtung einen Antrieb und wenigstens zwei, durch den Antrieb antreibbare Räder sowie ein erstes, austauschbares Verbindungselement umfasst, wobei das Verbindungselement geeignet ist, eine lösbare Verbindung mit einem zu transportierenden Behälterbehandlungsaggregat einzugehen, wobei der Antrieb ausgebildet ist, um eine Leistung zu erbringen, die wenigstens 400W beträgt, wobei die Vorrichtung eine Anhebvorrichtung umfasst, die geeignet ist, das Behälterbehandlungsaggregat an einer von den zwei Rollen abgewandten Seite des Behälterbehandlungsaggregats anzuheben; wobei jedes Behälterbehandlungsaggregat ein zweites, von jedem anderen Behälterbehandlungsaggregat verschiedenes Verbindungselement umfasst und das erste Verbindungselement und das zweite Verbindungselement in eineindeutiger Weise einander zugeordnet sind.
